# EUROPEAN PATENT APPLICATION

(11) **EP 1 300 785 A1**
(43) Date of publication of application: **09.04.2003**
(21) Application number: 01930243.9
(22) Date of filing: 22.05.2001
(51) Int. Cl.: G06F 17/60

(54) **ADVERTISEMENT PRINTING SYSTEM**

(30) Priority: 22.05.2000 JP 2000149781
(71) Applicant: Opro Japan Co., Ltd., Tokyo 141-0031 (JP)
(72) Inventor: SATOMI, Kazunori, Opro Japan Co., Ltd., Tokyo 141-0031 (JP); KOIKE, Yasushi, Opro Japan Co., Ltd., Tokyo 141-0031 (JP)
(74) Representative: Slingsby, Philip Roy
(86) International application number: JP0104270
(87) International publication number: WO01090980

(57) **Abstract**

To provide an advertisement printing system by which a consumer can unconsciously obtain an advertisement that matches himself without taking complicated steps, while an advertiser can also print out an advertisement having a high level of advertising effectiveness.

When, for example, a consumer computer system 100 buys an article through a computer network such as the internet and requests to print out a bill, a transfer form, etc., a print-out demand signal is sent through an IF program 210 to a Script server 221. When having received the signal, the Script server 221 writes reservation information, purchase information, etc. of a user into a main database 233. Further, the Script server 221 writes the user's individual information into a profile database 231 and, at the same time, retrieves an advertisement that matches the user.

## Description

### Technical Field

The present invention relates to an advertisement printing system for inserting in printing such an advertisement content that corresponds to individual information and purchase information of a user.

### Background Art

Recently, a variety of commodities are advertised utilizing home pages opened in the internet, by which a user can access a specific one of these home pages to obtain the advertisement information give therein easily. There is also such a system available for distributing an ID and a password to each of the users, to display a page for each user when he has entered his ID and password, thus narrowing the users down to specific ones who are authorized to view advertisements.

As driven by such a trend, an individual-specific internet advertising method which corresponds to his purchase history proposed in Japan Patent Application Laid-Open No. Hei 11-282393 implicitly provides a method of displaying such advertisement information in a WWW page that corresponds to a user purchase history.

This prior art method, however, would display advertisement in a WWW page to only such a person who wish to view an advertisement when he has taken predetermined steps intentionally. Moreover, although such a WWW page can be printed out in a hardcopy etc., it has not been created as printing data originally.

### Disclosure of the Invention

It is an object of the present invention to provide an advertisement printing system that permits a consumer to unconsciously obtain an advertisement that matches him without taking complicated steps and also that can print an advertisement having a high level of advertising effectiveness as viewed from the side of the advertiser.

To solve the problems, the present invention provides such an advertisement printing system for providing an advertisement area to printing output from a Web server through a computer network to a consumer computer system to thereby insert an advertisement content into the advertisement area, in which the Web server comprises: an advertisement database storing therein a plurality of advertisement contents; access means for accessing at least one consumer's information database accumulating therein a variety of kinds of user information; receiving means for receiving a print-out demand signal sent from the consumer computer system; retrieval means for referencing a consumer computer identifier carried in the print-out demand signal and the consumer information database to thereby retrieve an advertisement contents that match a consumer from the advertisement database; insertion means for inserting a retrieval-matched advertisement contents into an advertisement area provided in the printing data; sending means for sending the printing data having the advertisement content inserted therein to the consumer computer system; and printing means for printing through the consumer computer system to an output form.

This advertisement printing system also comprises such sending means that if the consumer computer system has no printer, sending the printing data in which the advertisement contents is inserted to a FAX machine through a telephone line.

The present invention also provides an advertisement printing method for providing an advertisement area to printing output to a consumer computer system through a computer network to thereby insert an advertisement content into the advertisement area, comprising the steps of: upon reception of a print-out demand signal sent from the consumer computer system, accessing at least one consumer information database accumulating therein a variety of kinds of user information; referencing a consumer computer identifier in the print-out demand signal and the consumer information database to thereby retrieve an advertisement content that matches a consumer from an advertisement database storing therein a plurality of advertisement contents; inserting a retrieval-matched advertisement contents into the advertisement area provided in printing data; sending the printing data in which the advertisement contents is inserted to the consumer computer system; and printing the printing data through the consumer computer system to an output form.

Furthermore, this advertisement printing system, if the consumer computer system has no printer, sends through a telephone line to a FAX machine the printing data in which the advertisement content is inserted.

Further, the present invention provides an electronic medium which accumulates therein such software that executes processing for providing an advertisement area to printing output through a computer network to a consumer computer system, wherein this processing comprises: a first step of receiving a print-out demand signal sent from the consumer computer system; a second step of accessing at least one consumer information database accumulating therein a variety of kinds of user information; a third step of referencing a consumer computer identifier in the print-out demand signal and a consumer information database to thereby retrieve an advertisement content that matches a consumer from an advertisement database storing therein a plurality of advertisement contents; a fourth step of inserting a retrieval-matched advertisement content into an advertisement area provided in printing data; a fifth step of sending to t he consumer computer system the printing data in which the advertisement content is inserted; and a sixth step of printing through the consumer computer system the printing data to a output form.

Furthermore, this electronic medium executes a step of, if the consumer computer system has no printer, sending through a telephone line to a FAX machine the printing data in which the advertisement content is inserted.

Furthermore, the consumer computer system of the advertisement printing system may be a mobile terminal.

Furthermore, the consumer computer system of the advertisement printing method may be a mobile terminal.

Furthermore, the consumer computer system of the electronic medium may be a mobile terminal.

Furthermore, the present invention provides an advertisement printing system for providing an advertisement area in printing data output from a Web server to a variety of kinds of servers through a computer network to thereby insert an advertisement content in this advertisement area, wherein the Web server comprises: an advertisement database storing therein a plurality of advertisement contents; access means for accessing at least one consumer information database accumulating therein a variety of kinds of user information; receiving means for receiving a print-out demand signal sent from the consumer computer systems retrieval means for referencing a consumer computer identifier in the print-out demand signal and a consumer information database to thereby retrieve an advertisement content that matches a consumer from the advertisement database; inserting means for inserting a retrieval-matched advertisement content into the advertisement area provided in the printing data; and sending means for sending to the variety of kinds of servers the printing data in which the advertisement content is inserted.

In this advertisement printing system, the variety of kinds of servers may be a FAX server, an Internet Print server, or an E-mail server.

Furthermore, the present invention provides an advertisement printing method for providing an advertisement area in printing data output to a variety of kinds of servers through a computer network to thereby insert an advertisement content in this advertisement area, comprising the steps of: upon reception of the print-out demand signal sent from the consumer computer system, accessing at least one consumer information database accumulating therein a variety of kinds of user information; referencing a consumer computer identifier contained in the print-out demand signal and a consumer information database; retrieving an advertisement content that matches a consumer from an advertisement database storing therein a plurality of advertisement contents; inserting a retrieval-matched advertisement content into the advertisement area provided in the printing data; and sending to the variety of kinds of servers the printing data in which the advertisement content is inserted.

In this advertisement printing method, the variety of kinds of servers may be a FAX server, an Internet Print server, or an E-mail server.

Further, the present invention provides an electronic medium which accumulates therein such software that executes processing for providing an advertisement area to printing data output to a variety of kinds of servers through a computer network to thereby insert an advertisement content into this advertisement area, in which the software comprises: a first step of receiving a print-out demand signal sent from a consumer computer system; a second step of accessing at least one consumer information database accumulating therein a variety of kinds of user information; a third step of referencing a consumer computer identifier contained in the print-out demand signal and a consumer information database to thereby retrieve search an advertisement content that matches a consumer from an advertisement database storing therein a plurality of advertisement contents; a fourth step of inserting a retrieval-matched advertisement content into the advertisement area provided in the printing data; a fifth step of sending to the variety of kinds of servers the printing data in which the advertisement content is inserted.

In this electronic medium, the variety of kinds of servers may be a FAX server, an Internet Print server, or an E-mail server.

### Brief Description of the Drawings

FIG. 1 is a schematic diagram for showing an advertisement printing system of the present invention;
FIG. 2 is an overall block diagram for showing the advertisement printing system of the present invention; and
FIG. 3 is a flowchart for showing processing according to an embodiment of the present invention.

### Best Mode for Carrying out the Invention

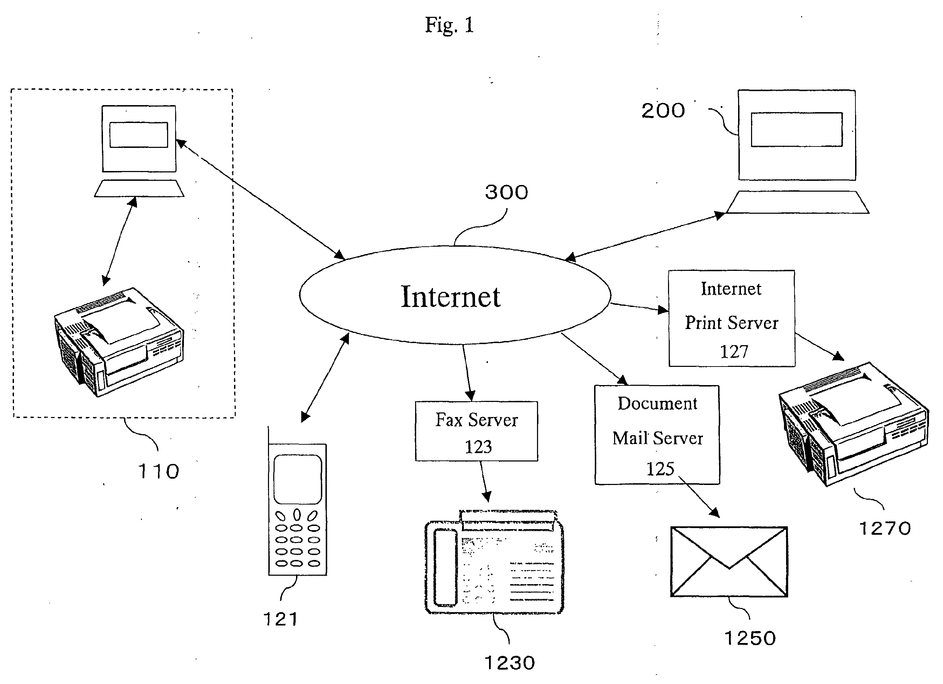

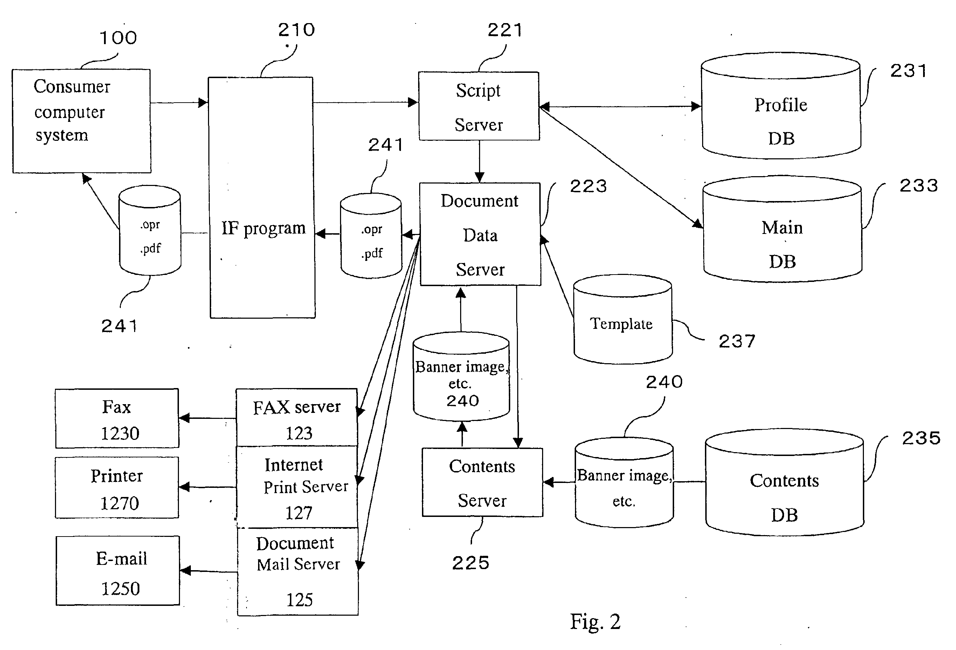

The following will describe embodiments of the present invention with reference to the drawings. FIG. 1 is a schematic diagram for showing an advertisement printing system of the present invention and FIG. 2, an overall block diagram for showing the advertisement printing system of the present invention. According to the present invention, when a user, for example, buys an article through a computer network such as the internet and requests the system to print out, for example, a bill and a transfer form (which hereinafter refer to printing data including a written estimate, a coupon ticket, a ticket, map information, stock price information, real estate information, etc.), an advertisement contents corresponding to his individual information and purchase information is automatically inserted into these bill and transfer form.

When, in FIG. 1, a user buys an article at a Web site connected to the internet 300, a consumer computer system (a personal computer and its peripheral 110 or mobile terminal 121) sends a commodity name, a manufacturer name, a type number, a money amount, a color, a date and time, individual information (name, address, age, sex, telephone number, occupation), etc. to a Web server 200 that operates and maintains the system. These information items thus sent are accumulated as user information in a database. The Web server 200, on the other hand, saves therein a session management table and also saves a correspondence table of sessions and cookies and/or a correspondence table of sessions, IP addresses, and/or terminal IDs.

A consumer computer identifier which can thus be to be managed from the first time of purchasing can be permanently assigned to and used by each individual as one of the user information items. The Web server 200 having the user information and an advertisement database retrieves an advertisement that matches each individual according to such a procedure as detailed in FIG. 2. Thus retrieved advertisement is inserted into printing data, which is then sent to either one of the following destinations in its respective manner:
output to a printer, if owned by the consumer computer system (indicated by a reference numeral 110 in FIG. 1);
directly transmitted to a FAX 1230 through a telephone line;
output to a FAX 123 and then transmitted to a specified FAX 1230;
output to a Document Mail server 125 and then transmitted as e-mail 1250 accompanied by an OPR (document format developed by the present inventor) or PDF (document format developed by Adobe Co., Ltd. that can display a document independently on a specific platform) file; or
output to an Internet Print server 127 and then to a predetermined printer 1270.

The following will describe a procedure for inserting an advertisement that matches each individual into printing, with reference to FIG. 2. When the consumer computer system 100 (personal computer and its peripheral 110 and mobile terminal 121 in FIG. 1) buys an article through a computer network such as the internet and requests the system to print out a bill, a transfer form, etc., the print-out demand signal is sent through an IF program (interface program) to a Script server 221. When having received this signal, the Script server 221 writes reservation information, purchase information, etc. of a user into a main database (main DB) 233. Further, the Script server 221 writes user's individual information (name, address, age, sex, telephone number, occupation) into a profile database (profile DB) 231 and, at the same time, retrieves an advertisement that matches the user. Note here that association between the advertisement and the user is defined separately, for example, decided on the basis of the individual information and the number of times of referencing each advertisement.

A retrieval result is handed over from the Script server 221 to a Document Data server 223, which in turn creates printing data under conditions specified by the Script server 221. If an advertisement area is specified in a template of this printing data beforehand, the Document Data server 223 accesses a Contents server 225 (which is called a Contents Control server 225 also) to thereby obtain a necessary advertisement content 240. The Document Data server 223 inserts thus obtained advertisement content 240 into the advertisement area in the printing data. The printing data having the advertisement content 240 inserted therein is sent to either one of the following destinations in its respective manner:
output to a printer, if owned by the consumer computer system (which is indicated by a reference numeral 110 in FIG. 1);
directly transmitted to the FAX 1230 through a telephone line;
output to the FAX server 123 and then transmitted to a specified FAX 1230;
output to the Document Mail server 125 and then transmitted as the e-mail 1250 accompanied by an OPR or PDF file; or
output to the Internet Print server 127 and then to the specified printer 1270.

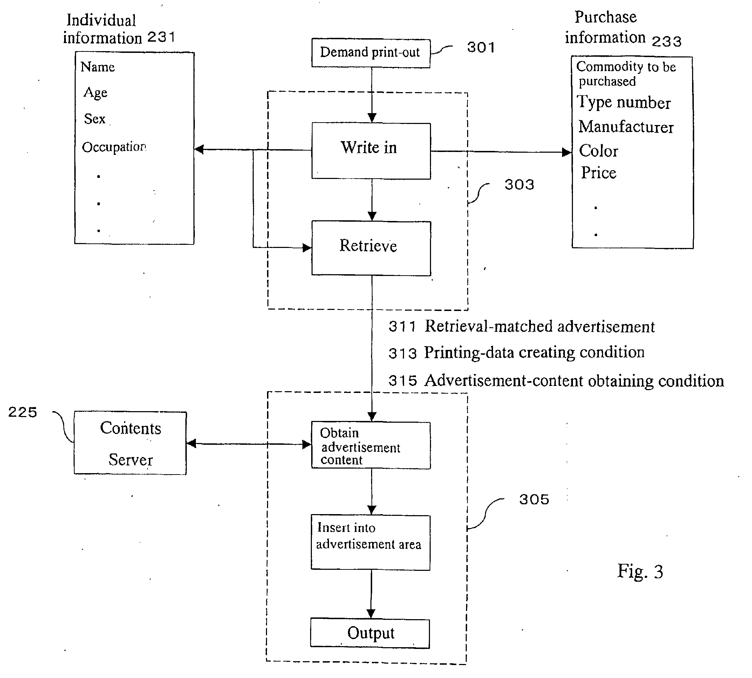

FIG. 3 is a flowchart for showing processing for outputting the printing data in response to such demand for printing a bill, a transfer form, etc. that is sent from the consumer computer system 100. Note here that a portion 303 enclosed by a dotted line indicates processing executed in the Script server 221 and another portion 305, processing executed by the Document Data server 223.

First when a user, for example, buys an article through the internet 300, the consumer computer system 100 demands to print out a bill, a transform, etc. (step 301). The Script server 221 writes the individual information 231 (user's profile) and the purchase information 233 (which may be reservation information, contract information, etc.) obtained from the consumer computer system 100 into the database and, at the same time, retrieves an advertisement that matches the user based on the individual information 231, the number of times of referencing the advertisement (step 303). As an output of the processing result at step 303 are obtained, for example, a retrieval-matched advertisement 311, a printing-data creating condition 313 (template 237), and an advertisement-content obtaining condition 315.

Those outputs 311-315 are handed over to the Document Data server 223. If an advertisement area is provided in the printing-data creating condition 313 beforehand, the Document Data server 223 accesses the Contents server 225 to thereby obtain a necessary advertisement content (banner image, text, etc.). As the obtaining condition in this case, the advertisement-content obtaining condition 315 is employed. Thus obtained advertisement content is inserted into the advertisement area and then sent to either one of the following destinations in its respective way:
output to a printer, if owned by the consumer computer printer (which is indicated by a reference numeral 110 in FIG. 1);
directly transmitted to the FAX 1230 through a telephone line;
output to the FAX server 123 and then transmitted to a specified FAX 1230;
output to the Document Data server 125 and then transmitted to the e-mail 1250 accompanied by an OPR or PDF file; or
output to the Internet Print server 127 and then to a predetermined printer 1270.

Although the embodiment of the present invention has been described above with reference to FIGS. 1-3, the present invention is not limited thereto; for example, of course, the numbers of the databases and the servers employed may be changed and also, their names may be changed appropriately as occasion demands.

### Probability of Utilized industrialization

As described above, the present invention can provide an advertisement printing system whereby a consumer can unconsciously obtain an advertisement that matches himself without taking complicated steps, while an advertiser also can print out an advertisement having a high level of advertisement effectiveness.

## Claims

1. An advertisement printing system for providing an advertisement area in printing output from a Web server to a consumer computer system through a computer network, wherein said Web server comprises:
an advertisement database for storing therein a plurality of advertisement contents;
access means for accessing at least one consumer information database accumulating therein a variety of kinds of user information;
receiving means for receiving a print-out demand signal sent from said consumer computer system;
retrieval means for referencing a consumer computer identifier contained in said print-out demand signal and said consumer information database to thereby retrieve an advertisement content that matches a user from said advertisement database;
inserting means for inserting the retrieval-matched advertisement content into the advertisement area provided in printing data;
sending means for sending said printing data in which said advertisement content is inserted to said consumer computer system; and
printing means for printing said printing data through the consumer computer system in an output form.

2. The advertisement printing system according to claim 1, comprising sending means for sending said printing data in which said advertisement content is inserted to a FAX machine through a telephone line if said consumer computer system has no printer.

3. An advertisement printing method for providing an advertisement area in printing output to a consumer computer system through a computer network to thereby insert an advertisement content into said advertisement area, comprising the steps of:
upon reception of a print-out demand signal sent from said consumer computer system, accessing at least one consumer database accumulating therein a variety of kinds of user information;
referencing an consumer computer identifier contained in said print-out demand signal and said consumer information database;
retrieving an advertisement content that matches a consumer from an advertisement database storing therein a plurality of advertisement contents;
inserting the retrieval-matched advertisement content into the advertisement area provided in printing data;
sending said printing data in which said advertisement content is inserted to said consumer computer system; and
printing said printing data through said consumer computer system in an output form.

4. The advertisement printing method according to claim 3, wherein if said consumer computer system has no printer, said printing data in which said advertisement content is inserted is sent to a FAX machine through a telephone line.

5. An electronic medium accumulating software which executes processing for providing an advertisement area in printing output to a consumer computer system through a computer network system to thereby insert an advertisement content into said advertisement area, said software comprising:
a first step of receiving a print-out demand signal sent from said consumer computer system;
a second step of accessing at least one consumer information database accumulating therein a variety of kinds of user information;
a third step of referencing a consumer computer identifier contained in said print-out demand signal and said consumer information database to thereby retrieve an advertisement content that matches a consumer from an advertisement database storing therein a plurality of advertisement contents;
a fourth step of inserting the retrieval-matched advertisement content into the advertisement area providing in printing data;
a fifth step of sending said printing data in which said advertisement content is inserted to said consumer computer system; and
a sixth step of printing said printing data through said consumer computer system in an output form.

6. The electronic medium according to claim 5, accumulating software for executing a step of sending printing data in which said advertisement content is inserted to a FAX machine through a telephone line if said consumer computer system has no printer.

7. The advertisement printing system according to claim 1 or 2, wherein said consumer computer system is a mobile terminal.

8. The advertisement printing method according to claim 3 or 4, wherein said consumer computer system is a mobile terminal.

9. The electronic medium according to claim 5 or 6, wherein said consumer computer system is a mobile terminal.

10. An advertisement printing system for providing an advertisement area in printing output from a Web server through a computer network to a variety of kinds of servers, wherein said Web server comprises:
an advertisement database for storing therein a plurality of advertisement contents;
access means for accessing at least one consumer information database accumulating therein a variety of kinds of user information;
receiving means for receiving a print-out demand signal sent from said consumer computer system;
retrieval means for referencing a consumer computer identifier contained in said print-out demand signal and said consumer information database to thereby retrieve an advertisement content that matches a user from said advertisement database;
inserting means for inserting the retrieval-matched advertisement content into the advertisement area provided in printing data; and
sending means for sending said printing data in which said advertisement content is inserted to said variety of kinds of servers.

11. The advertisement printing system according to claim 10, wherein said variety of kinds of servers are a FAX server, an Internet Print server, and an E-mail server.

12. An advertisement printing method for providing an advertisement area in printing output to a variety of kinds of servers through a computer network to thereby insert an advertisement content into said advertisement area, comprising the steps of:
upon reception of a print-out demand signal sent from said consumer computer system, accessing at least one consumer database accumulating therein a variety of kinds of user information;
referencing an consumer computer identifier contained in said print-out demand signal and said consumer information database;
retrieving an advertisement content that matches a consumer from an advertisement database storing therein a plurality of advertisement contents;
inserting the retrieval-matched advertisement content into the advertisement area provided in printing data; and
sending said printing data in which said advertisement content is inserted to said variety of kinds of servers.

13. The advertisement printing method according to claim 12, wherein said variety of kinds of servers are a FAX server, an Internet Print server, and an E-mail server.

14. An electronic medium accumulating software which executes processing for providing an advertisement area in printing output to a variety of kinds of servers through a computer network system to thereby insert an advertisement content into said advertisement area, said software comprising:
a first step of receiving a print-out demand signal sent from said consumer computer system;
a second step of accessing at least one consumer information database accumulating therein a variety of kinds of user information;
a third step of referencing a consumer computer identifier contained in said print-out demand signal and said consumer information database to thereby retrieve an advertisement content that matches a consumer from an advertisement database storing therein a plurality of advertisement contents;
a fourth step of inserting the retrieval-matched advertisement content into the advertisement area providing in printing data; and
a fifth step of sending said printing data in which said advertisement content is inserted to said variety of kinds of servers.

15. The electronic medium according to claim 14, wherein said variety of kinds of servers are a FAX server, an Internet Print server, and an E-mail server.
